# EUROPEAN PATENT APPLICATION

(11) **EP 4 773 216 A1**
(43) Date of publication of application: **08.07.2026**
(21) Application number: 25226380.1
(22) Date of filing: 22.12.2025
(51) Int. Cl.: H01M 4/136, H01M 4/58, H01M 10/0525

(54) **POSITIVE ELECTRODE, BATTERY, ENERGY-STORAGE APPARATUS, AND ELECTRICITY-CONSUMPTION DEVICE**

(30) Priority: 02.01.2025 CN 202510003020
(71) Applicant: Hithium Tech HK Limited, Hong Kong (HK)
(72) Inventor: XIE, Yanchong, Xiamen, 361100 (CN); ZHENG, Jianming, Xiamen, 361100 (CN); JIAO, Tianpeng, Xiamen, 361100 (CN); YANG, Wenhui, Xiamen, 361100 (CN)
(74) Representative: Mewburn Ellis LLP

(57) **Abstract**

The present disclosure provides a positive electrode, a battery, an energy-storage apparatus, and an electricity-consumption device. The positive electrode includes a positive current collector. The positive current collector is provided with a positive-electrode-material layer on at least one surface of the positive current collector. The positive-electrode-material layer includes a positive electrode material. The positive electrode material includes first particles and second particles. The second particles each are a secondary particle formed by fusing primary particles. Each second particle define gaps in a surface of the second particle, the second particle defines holes inside the second particle, and the holes are in communication with an outside through the gaps. An average sphericity of the second particles is *S,* and *S* satisfies *S* ≤ 0.6.

## Description

### TECHNICAL FIELD

This disclosure relates to the technical field of energy storage, in particular to a positive electrode, a battery, an energy-storage apparatus, and an electricity-consumption device.

### BACKGROUND

Secondary batteries (such as lithium-ion batteries) are widely used in various fields such as energy storage, portable electronic devices, electric vehicles, etc., because of their advantages of large specific energy, high operating voltage, low self-discharge rate, small size, light weight, etc.

Lithium-ion batteries based on a positive electrode material, i.e., lithium ion phosphate (LiFePO₄, LFP), have the advantages of high safety and stability. With the increasing requirements for battery capacity in energy-storage scenarios, one of the main methods at present is to use LFP materials with high compacted density, and LFP materials mainly achieve high compacted density by increasing a proportion of large particles in the material. However, due to a relatively large size of the large particles (whose particle size is usually greater than 1 µm), the migration path of lithium ions will be extended, making it difficult to fully utilize the capacity performance of the positive electrode material. Therefore, in the LFP materials with high compacted density, how to enhance the capacity utilization of large-particle materials has become an urgent technical problem to be solved.

### SUMMARY

In order to address the above technical problems, the present disclosure discloses a positive electrode, a battery, an energy-storage apparatus, and an electricity-consumption device, so as to promote the capacity utilization of a large-particle positive electrode material and improve the capacity performance and cycling performance of the battery.

In a first aspect, the present disclosure provides a positive electrode. The positive electrode includes a positive current collector. The positive current collector is provided with a positive-electrode-material layer on at least one surface of the positive current collector. The positive-electrode-material layer includes a positive electrode material. The positive electrode material includes first particles and second particles. The second particles each are a secondary particle formed by fusing primary particles. Each second particle defines gaps in a surface of the second particle, the second particle defines holes inside the second particle, and the holes are in communication with an outside through the gaps. An average sphericity of the second particles is *S*, and *S* satisfies *S* ≤ 0.6.

In some embodiments of the present disclosure, 0.4 ≤ *S* ≤ 0.6.

In some embodiments of the present disclosure, in a cross section of the second particle, a proportion of an area of the holes to a total area of the cross section is *A,* and *A* satisfies 10% ≤ *A* ≤ 23%.

In some embodiments of the present disclosure, the second particle includes multiple fused primary particles, and the gaps are defined at fused interfaces of the multiple fused primary particles.

In some embodiments of the present disclosure, a maximum particle size of the primary particles is *Dₘₐₓ,* and *Dₘₐₓ* satisfies 1 µm ≤ *Dₘₐₓ* ≤ 6 µm.

In some embodiments of the present disclosure, the positive electrode material satisfies at least one of the following characteristics: a) a *Dv50* of the positive electrode material is *D*₁, and *D*₁ satisfies 0.8 µm ≤ *D*₁ ≤ 1.3 µm; or b) a compacted density of the positive electrode material ranges from 2.5 g/cm³ to 2.6 g/cm³.

In some embodiments of the present disclosure, each first particle is of a solid ellipsoidal structure.

In some embodiments of the present disclosure, a *Dv50* of the first particles is *D*₂, and *D*₂ satisfies 0.2 µm ≤ *D*₂ ≤ 0.5 µm.

In some embodiments of the present disclosure, a chemical formula of the positive electrode material is LiFeₓTi_{y}PO₄/C, where *x+y*=1, and 0 *<y* ≤ 0.05.

In some embodiments of the present disclosure, an elongation of the positive electrode ranges from 0.5% to 0.8%.

In a second aspect, the present disclosure provides a battery. The battery includes the positive electrode in the first aspect.

In a third aspect, the present disclosure provides an energy-storage apparatus. The energy-storage apparatus includes a box body and at least one battery in the second aspect, where the at least one battery is accommodated in the box body.

In a fourth aspect, the present disclosure provides an electricity-consumption device. The electricity-consumption device includes the energy-storage apparatus in the third aspect, where the energy-storage apparatus is configured to power the electricity-consumption device.

Compared with the related art, the present disclosure at least has the following beneficial effects. The present disclosure provides the positive electrode, the battery, the energy-storage apparatus, and the electricity-consumption device. The positive electrode includes the positive current collector. The positive current collector is provided with the positive-electrode-material layer on at least one surface of the positive current collector. The positive-electrode-material layer includes the positive electrode material. The positive electrode material includes the first particles and the second particles. The second particles each are a secondary particle formed by fusing primary particles. The second particle defines gaps in the surface of the second particle, the second particle defines holes inside the second particle, and the holes are in communication with the outside through the gaps. As such, the positive electrode material can be quickly infiltrated in an electrolyte through the gaps and the holes, and the diffusion capability of lithium ions can be enhanced, thereby promoting the capacity utilization of the large-particle positive electrode material. Additionally, the secondary particle formed by fusing the primary particles is of a block-like structure, which provides higher mechanical strength and is less likely to be broken during battery cycling, thereby improving the cycling performance of the battery. The average sphericity of the second particles is *S,* and *S* satisfies *S* ≤ 0.6. The second particle has a low sphericity, which can hinder the displacement and deformation of the particles during rolling, thereby reducing the elongation of the positive electrode. In summary, in the present disclosure, the capacity performance and cycling performance of a secondary battery can be improved, and the positive electrode has a lower elongation. When the secondary battery of the present disclosure is applicable to the energy-storage apparatus, the energy-storage efficiency and the service life of the energy-storage apparatus can be improved.

### BRIEF DESCRIPTION OF THE DRAWINGS

In order to describe technical solutions in embodiments of the disclosure more clearly, the following will give a brief introduction to accompanying drawings required for describing embodiments. Apparently, the accompanying drawings hereinafter described illustrate some embodiments of the disclosure. Based on these drawings, those of ordinary skill in the art can also obtain other drawings without creative effort.
FIG. 1 is a schematic structural diagram of a household energy-storage system according to an embodiments of the present disclosure.
FIG. 2 is a schematic structural diagram of a commercial energy-storage system according to an embodiments of the present disclosure.
FIG. 3 is a schematic diagram illustrating a test of an elongation of a positive electrode according to the present disclosure.
FIG. 4 is a scanning electron microscope (SEM) diagram of a positive electrode material in Embodiment 1.
FIG. 5 is an SEM diagram of a positive electrode material in Comparative embodiment 1.
FIG. 6 is an SEM diagram of a positive electrode material in Comparative embodiment 2.
FIG. 7 is an SEM diagram of a cross section of a positive-electrode-material layer in Embodiment 1.
FIG. 8 is a partially enlarged SEM diagram of a cross section of a positive-electrode-material layer in Embodiment 1.
FIG. 9 is a partially enlarged SEM diagram of a cross section of a positive-electrode-material layer in Comparative embodiment 1.
FIG. 10 is a particle size distribution diagram of positive electrode materials in Embodiment 1, Comparative embodiment 1, and Comparative embodiment 2.
FIG. 11 is a schematic structural view of a battery according to the present disclosure.
FIG. 12 is a schematic structural view of a box body according to the present disclosure.
FIG. 13 is a schematic block diagram of an electricity-consumption device according to the present disclosure.

Description of reference signs: 1-energy-storage apparatus, 2-electric energy conversion device, 3-first user load, 4-second user load, 11-positive current collector, 12-first positive-electrode-material layer, 13-second positive-electrode-material layer, 40-roller, 400-commercial energy-storage system, 410-high-voltage cable, 420-first electric-energy-conversion device, 430-second electric-energy-conversion device, 300- battery, 310- separator, 320- negative electrode, 330- electrolyte, 340- positive electrode, 100-electricity-consumption device, 50- box body.

### DETAILED DESCRIPTION

The following may illustrate clearly and completely technical solutions of embodiments of the disclosure with reference to accompanying drawings of embodiments of the disclosure. Apparently, embodiments illustrated herein are merely some, rather than all, of the disclosure. Based on the embodiments of the disclosure, all other embodiments obtained by those of ordinary skill in the art without creative effort shall fall within the protection scope of the disclosure.

In the present disclosure, the terms "upper", "lower", "left", "right", "front", "rear", "top", "bottom", "inner", "outer", "vertical", "horizontal", "lateral", "longitudinal", etc., indicate an orientation or a positional relationship based on the orientation or the positional relationship illustrated in the accompanying drawings. These terms are used mainly to better describe the present disclosure and its embodiments, and are not used to limit the indicated apparatus, element, or component to have a particular orientation or to be constructed and operated in a particular orientation.

Additionally, some of the terms described above may indicate other meanings in addition to the orientation or the positional relationship. For example, the term "upper" may indicate some sort of attachment or connection in some cases. The specific meaning of these terms in the present disclosure may be understood by the person skilled in the art as appropriate.

Moreover, the terms "mount," "set," "provided with," "connect", and "connected with" are understood in a broad sense. For example, they may be a fixed connection, a detachable connection, or an integral construction. They may be a mechanical connection, or an electrical connection. They may be a direct connection, or an indirect connection through an intervening medium, or may be an internal communication between two apparatus, elements, or components. The specific meaning of the terms in the present disclosure may be understood by the person skilled in the art as appropriate.

Furthermore, the terms "first," "second," etc., are mainly used to distinguish between different apparatus, elements, or components (the particular types and constructions may be the same or different), and are not used to indicate or imply the relative importance and quantity of the indicated apparatus, elements, or components. Unless otherwise indicated, the meaning of "a plurality of" or "the plurality of" is two or more.

It can be noted that, in the content of the present disclosure, a lithium-ion battery is taken as an example of a secondary battery to explain the present disclosure, but the secondary battery of the present disclosure is not limited to the lithium-ion battery.

In order to increase the compacted density of a positive electrode material, lithium ion phosphate (LiFePO4, LFP) materials usually adopt a two-stage gradation of large particles and small particles, i.e., the small particles are the primary component, and a certain number of large particles are combined. However, if the large particles have a relatively large size, the migration path of lithium ions will be extended, making it difficult to fully utilize the capacity performance of the positive electrode material. In addition, if primary particles constituting the large particles have an excessively small particle size (e.g., a nano-sized particle), although the capacity utilization of the large-particle material can be improved, the overall mechanical strength of the large particles is relatively low, such that the large particles are likely to be broken when a positive electrode is rolled or during a charging/discharging cycle, thereby affecting the cycling performance of the lithium-ion battery.

In view of this, the present disclosure provides a positive electrode. The positive electrode includes a positive current collector. The positive current collector is provided with a positive-electrode-material layer on at least one surface of the positive current collector. The positive-electrode-material layer includes a positive electrode material. The positive electrode material includes first particles and second particles. The second particles each are a secondary particle formed by fusing primary particles. Each second particle defines gaps in a surface of the second particle, the second particle defines holes inside the second particle, and the holes are in communication with the outside through the gaps. In the positive electrode material of the present disclosure, the first particle is a primary particle, and the second particle is a secondary particle. An average sphericity of the second particles is *S,* and *S* satisfies *S* ≤ 0.6. In another optional embodiment, 0.4 ≤ *S* ≤ 0.6. For example, *S* is 0.4, 0.45, 0.5, 0.55, or 0.6.

The positive electrode of the present disclosure includes the positive electrode material. The second particle defines holes inside the second particle, and the holes are in communication with the outside through the gaps, such that the positive electrode material can be quickly infiltrated in an electrolyte through the gaps and the holes, and the diffusion capability of lithium ions can be enhanced, thereby promoting the capacity utilization of the large-particle positive electrode material. Additionally, the secondary particle formed by fusing the primary particles is of a block-like structure, which provides higher mechanical strength and is less likely to be broken during cycling of the lithium-ion battery, thereby improving the cycling performance of the lithium-ion battery. The inventors have found that, when *S* is too large (e.g., greater than 0.6), the second particle is more prone to have a spherical-like structure, and is more likely to be displaced and deformed during rolling, which is not conducive to reducing the elongation of the positive electrode. When *S* is too small, the compacted density of the positive electrode material may be affected, which is not conducive to the capacity utilization of the positive electrode material. The second particle of the present disclosure has a relatively low sphericity, which can hinder the displacement and deformation of the particles during rolling, thereby reducing the elongation of the positive electrode. In summary, in the present disclosure, the capacity performance and cycling performance of the lithium-ion battery can be improved, and the positive electrode has a lower elongation. When the lithium-ion battery of the present disclosure is applicable to the energy-storage apparatus, the energy-storage efficiency and the service life of the energy-storage apparatus can be improved.

In the present disclosure, the sphericity refers to a ratio of a long diameter to a short diameter of a particle.

In an optional embodiment, in a cross section of the second particle, a proportion of an area of the holes to a total area of the cross section is *A,* and *A* satisfies 10% ≤ *A* ≤ 23%. In another optional embodiment, 10% ≤ *A* ≤ 15%. For example, *A* is 10%, 12%, 13%, 15%, 18%, 20%, or 23%. By adjusting a value of *A* within the above range, the positive electrode material can not only have good electrolyte infiltration, but also have sufficient mechanical strength, which is beneficial to improving the capacity performance and cycling performance of the lithium-ion battery.

In an optional embodiment, the second particle includes multiple fused primary particles, and gaps are defined at fused interfaces of the multiple fused primary particles, such that the second particle has a "spliced" structure in a surface of the second particle, i.e., the second particle is formed by fusing and splicing multiple primary particles, which is beneficial for the electrolyte to infiltrate into the second particle through the gap, thereby improving the capacity performance of the positive electrode material.

In an optional embodiment, the maximum particle size of the primary particles is *Dₘₐₓ,* and *Dₘₐₓ* satisfies 1 µm ≤ *Dₘₐₓ* ≤ 6 µm. In another optional embodiment, 1.4 µm ≤ *Dₘₐₓ* ≤ 3 µm. For example, *Dₘₐₓ* is 1 µm, 1.3 µm, 1.5 µm, 1.8 µm, 2.5 µm, 3 µm, 4 µm, 5 µm, or 6 µm. By adjusting *Dₘₐₓ* within the above range, the second particle can have the "spliced" structure on the surface of the second particle, such that gaps can be defined at the fused interfaces of the fused primary particles, which is beneficial for the electrolyte to infiltrate into the second particle through the gap, thereby improving the capacity performance of the positive electrode material.

In an optional embodiment, a *Dv50* of the positive electrode material is *D*₁, and *D*₁ satisfies 0.8 µm ≤ *D*₁ ≤ 1.3 µm. In another optional embodiment, 0.9 µm ≤ *D*₁≤ 1.2 µm. For example, *D*₁ is 0.8 µm, 0.9 µm, 1.0 µm, 1.1 µm, 1.2 µm, or 1.3 µm. By adjusting *D*₁ within the above range, it is advantageous to achieve a more reasonable particle-size gradation of the first particles and the second particles, thereby improving the capacity utilization of the positive electrode while reducing the elongation of the positive electrode.

In the present disclosure, *Dv*50 represents a particle size at which the cumulative volume reaches 50% in a volume-based particle size distribution starting from a small particle size.

In an optional embodiment, the compacted density of the positive electrode material ranges from 2.5 g/cm³ to 2.6 g/cm³. By adjusting the compacted density of the positive-electrode-material layer within the above range, it is beneficial to utilize the capacity performance of the lithium-ion battery.

In an optional embodiment, the first particle is of a solid ellipsoidal structure, such that the positive electrode material can have a higher compacted density, which is beneficial to improving the capacity of the lithium-ion battery.

In an optional embodiment, a *Dv50* of the first particles is *D*₂, and *D*₂ satisfies 0.2 µm ≤ *D*₂ ≤ 0.5 µm. For example, *D*₂ is 0.2 µm, 0.3 µm, 0.4 µm, or 0.5 µm. In this case, a two-stage gradation of large particles and small particles can be formed with the second particles, such that the positive electrode material has a higher compacted density, which is beneficial to improving the capacity of the lithium-ion battery.

In an optional embodiment, a chemical formula of the positive electrode material is LiFeₓTi_{y}PO₄/C, where *x*+*y*=1, and 0 <*y* ≤ 0.05. For example, *y* is 0.01, 0.02, 0.03, 0.04, or 0.05. The positive electrode material with the above chemical formula contains a doping element titanium (Ti) that can provide more capacity and is beneficial to improving the capacity performance of the lithium-ion battery.

In an optional embodiment, an elongation of the positive electrode ranges from 0.5% to 0.8%. For example, the elongation is 0.5%, 0.6%, 0.7%, or 0.8%, such that the positive electrode has a relatively low elongation, which is beneficial to reducing the risk of edge cracking of the positive electrode and improving the yield of the lithium-ion battery.

In an optional embodiment, a method for preparing the positive electrode material includes the following steps.

Preparation of a first pre-sintered material:
Step *a,* an iron source, a phosphorus source, a lithium source, and a titanium source are weighted according to a stoichiometric ratio required in LiFeₓTi_{y}PO₄/C (*x* + *y* = 1, and 0 <*y* ≤ 0.05) as a first raw material. Then, a carbon source is weighted to be 15% to 25% of a total mass of the first raw material and used as a second raw material. The first raw material and the second raw material are evenly mixed in a ball mill, pure water is added as a dispersant, and high-energy ball milling is carried out.

Step b, spray drying is carried out on the material after high-energy ball milling to form a first powder.

Step c, the first powder is put into a vacuum atmosphere furnace for first sintering treatment, and then is crushed to obtain the first pre-sintered material.

Preparation of a second pre-sintered material:
Step *a',* an iron source, a phosphorus source, a lithium source, and a titanium source are weighted according to a stoichiometric ratio required in LiFeₓTi_{y}PO₄/C (*x + y* = 1, and 0 <*y* ≤ 0.05) as a third raw material. Then, a carbon source is weighted to be 12% to 18% of a total mass of the third raw material and used as a fourth raw material. The third raw material and the fourth raw material are evenly mixed in a ball mill, pure water is added as a dispersant, and high-energy ball milling is carried out.

Step *b',* spray drying is carried out on the material after high-energy ball milling to form a second powder.

Step *c',* the second powder is put into a vacuum atmosphere furnace for second sintering treatment and then is crushed to obtain the second pre-sintered material.

Preparation of the positive electrode material:
The first pre-sintered material and the second pre-sintered material are mixed at a mass ratio of (6-8):(2-4), put into a vacuum atmosphere furnace for third sintering treatment, and then crushed to obtain the positive electrode material.

At Step *a* or Step *a',* the iron source can be selected from ferrous oxalate, iron phosphate, or iron oxide. The phosphorus source can be selected from lithium dihydrogen phosphate or ammonium dihydrogen phosphate. The lithium source can be selected from lithium carbonate or lithium hydroxide. The titanium source can be selected from titanium dioxide. The carbon source may be selected from glucose, sucrose, or citric acid. A ball-to-material ratio during the high-energy ball milling is 3-5: 1, a rotation speed ranges from 1200 r/min to 1800 r/min, and a ball milling time ranges from 15 h to 20 h.

At Step *b* or Step *b',* a pump speed of spray drying ranges from 8 mL/min to 12 mL/min, a drying temperature ranges from 180 °C to 220 °C, and the formed powder is granular.

At Step c, the protective atmosphere is nitrogen, the temperature of the first sintering treatment ranges from 340 °c to 360 °c, and the sintering time ranges from 5 h to 10 h.

At Step c', the protective atmosphere is nitrogen, the temperature of the second sintering treatment ranges from 440 °c to 520 °c, and the sintering time ranges from 6 h to 15 h.

In the preparation steps of the positive electrode material, the protective atmosphere is nitrogen, the temperature of the third sintering treatment ranges from 690 °C to 710 °C, and the sintering time ranges from 8 h to 12 h.

A manner of adjusting the average sphericity of the second particles is not particularly limited in the present disclosure, as long as the objective of the present disclosure can be achieved. For example, the average sphericity of the second particles usually decreases with a decrease in the content of the carbon source in the second pre-sintered material, and based on this, in the present disclosure, the average sphericity of the second particles can be adjusted by adjusting the content of the carbon source in the second pre-sintered material. For another example, the average sphericity of the second particles usually decreases with an increase in the sintering temperature during the second sintering treatment, and based on this, in the present disclosure, the average sphericity of the second particles can be adjusted by adjusting the temperature of the second sintering treatment. For another example, the average sphericity of the second particles usually decreases with an increase in the sintering time during the second sintering treatment, and based on this, in the present disclosure, the average sphericity of the second particles can be adjusted by adjusting the sintering time of the second sintering treatment.

A manner of adjusting the value of *A* is not particularly limited in the present disclosure, as long as the objective of the present disclosure can be achieved. For example, the value of *A* usually increases with a decrease in the content of the carbon source in the second pre-sintered material, and based on this, in the present disclosure, the value of *A* can be adjusted by adjusting the content of the carbon source in the second pre-sintered material. For another example, the value of *A* usually increases with an increase in the sintering temperature during the second sintering treatment, and based on this, in the present disclosure, the value of *A* can be adjusted by adjusting the temperature of the second sintering treatment. For another example, the value of *A* usually increases with an increase in the sintering time during the second sintering treatment, and based on this, in the present disclosure, the value of *A* can be adjusted by adjusting the sintering time of the second sintering treatment.

A manner of adjusting *Dₘₐₓ* is not particularly limited in the present disclosure, as long as the objective of the present disclosure can be achieved. For example, *Dₘₐₓ* usually increases with a decrease in the content of the carbon source in the second pre-sintered material, and based on this, in the present disclosure, *Dₘₐₓ* can be adjusted by adjusting the content of the carbon source in the second pre-sintered material. For another example, *Dₘₐₓ* usually increases with an increase in the sintering temperature during the second sintering treatment, and based on this, in the present disclosure, *Dₘₐₓ* can be adjusted by adjusting the temperature of the second sintering treatment. For another example, *Dₘₐₓ* usually increases with an increase in the sintering time during the second sintering treatment, and based on this, in the present disclosure, *Dₘₐₓ* can be adjusted by adjusting the sintering time of the second sintering treatment.

The present disclosure further provides a battery. The battery includes the positive electrode in any one of the above embodiments.

In the present disclosure, the positive-electrode-material layer may be disposed on one surface of the positive current collector in a thickness direction of the positive current collector, or may be disposed on both surfaces of the positive current collector in the thickness direction of the positive current collector. In the present disclosure, the positive-electrode-material layer is disposed on the surface of the positive current collector, that is, the positive-electrode-material layer may be disposed on a partial area of one surface of the positive current collector, or may be disposed on an entire area of one surface of the positive current collector. In the present disclosure, the positive current collector is not particularly limited as long as the objective of the present disclosure can be achieved. For example, the positive current collector may include, but is not limited to, an aluminum foil, an aluminum alloy foil, a composite current collector, etc. In the present disclosure, the thickness of the positive current collector is not particularly limited as long as the objective of the present disclosure can be achieved. For example, the thickness ranges from 4 µm to 12 µm. In the present disclosure, the thickness of the positive-electrode-material layer on one surface can range from 80 µm to 150 µm.

The lithium-ion battery of the present disclosure further includes a negative electrode. The negative electrode is not particularly limited in the present disclosure as long as the objective of the present disclosure can be achieved. For example, the negative electrode usually includes a negative current collector and a negative-electrode-material layer. The negative-electrode-material layer may be disposed on one or both surfaces of the negative current collector in a thickness direction of the negative current collector. In the present disclosure, the negative-electrode-material layer is disposed on the surface of the negative current collector, that is, the negative-electrode-material layer may be disposed on a partial area of one surface of the negative current collector, or may be disposed on an entire area of one surface of the negative current collector. The negative current collector is not particularly limited in the present disclosure as long as the objective of the present disclosure can be achieved. For example, the negative current collector may include, but is not limited to, a copper foil, a copper alloy foil, a nickel foil, a composite current collector, etc. In the present disclosure, the thickness of the negative current collector is not particularly limited as long as the objective of the present disclosure can be achieved. For example, the thickness ranges from 4 µm to 12 µm. In the present disclosure, the thickness of the negative-electrode-material layer on one surface can range from 70 µm to 200 µm.

In the present disclosure, the negative-electrode-material layer includes a negative electrode material, and the negative electrode material is not particularly limited as long as the objective of the present disclosure can be achieved. For example, the negative electrode material may include at least one of artificial graphite, natural graphite, carbonaceous mesophase spherule, soft carbon, hard carbon, silicon, silicon carbon, lithium titanate, etc.

In the present disclosure, the negative-electrode-material layer can further include a negative electrode binder. The negative electrode binder is not particularly limited in the present disclosure as long as the objective of the present disclosure can be achieved. For example, the negative electrode binder may include, but is not limited to, at least one of acrylate, polyamide, polyimide, polyamideimide, polyvinylidene fluoride, styrene-butadiene rubber, sodium alginate, polyvinyl alcohol, polytetrafluoroethylene, polyacrylonitrile, sodium carboxymethyl cellulose, or potassium carboxymethyl cellulose.

The lithium-ion battery of the present disclosure further includes a separator. The separator is not particularly limited in the present disclosure, and those skilled in the art can select the separator according to actual needs as long as the objective of the present disclosure can be achieved. For example, the separator may include a substrate layer and a surface treatment layer. The substrate layer may be a non-woven fabric, membrane, or composite membrane having a porous structure, and a material of the substrate layer may be selected from at least one of polyethylene, polypropylene, polyethylene terephthalate, or polyimide. Specifically, a polypropylene porous membrane, a polyethylene porous membrane, polypropylene non-woven fabric, polyethylene non-woven fabric, or a polypropylene-polyethylene-polypropylene porous composite membrane can be used.

The battery of the present disclosure further includes an electrolyte. The electrolyte is not particularly limited in the present disclosure, and those skilled in the art can select the electrolyte according to actual needs as long as the objective of the present disclosure can be achieved. For example, at least one of ethylene carbonate (EC), propylene carbonate (PC), diethyl carbonate (DEC), ethyl propionate (EP), propyl propionate (PP), ethyl methyl carbonate (EMC), dimethyl carbonate (DMC), vinylene carbonate (VC), fluoroethylene carbonate (FEC), etc., is mixed in a certain mass ratio or volume ratio to obtain a nonaqueous organic solvent, and then a lithium salt is added to be dissolved and evenly mixed. The type of the lithium salt is not limited in the present disclosure as long as the objective of the present disclosure can be achieved. For example, the lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, lithium bis(oxalate) borate (LiBOB), or lithium difluoroborate.

The concentration of the lithium salt in the electrolyte is not particularly limited in the present disclosure as long as the objective of the present disclosure can be achieved. Taking LiPF₆ as an example, the concentration of LiPF₆ in the electrolyte ranges from 5 wt% to 25 wt%. For example, the concentration of LiPF₆ is 5 wt%, 10 wt%, 11 wt%, 12 wt%, 12.5 wt%, 15 wt%, 20 wt%, or 25 wt%.

The battery of the present disclosure further includes a housing. The housing is not particularly limited in the present disclosure, and those skilled in the art can select the housing according to actual needs as long as the objective of the present disclosure can be achieved. For example, the housing can include an aluminum-plastic film.

The method for preparing the battery is not particularly limited in the present disclosure, and the preparation method known in the art can be selected as long as the objective of the present disclosure can be achieved. For example, the method for preparing the battery includes, but is not limited to, the following steps: stacking the positive electrode, the separator, and the negative electrode in order, performing winding, folding, or other operations as needed to obtain a bare battery cell with a winding structure, placing the bare battery cell in a packaging bag, injecting the electrolyte into the packaging bag, sealing the packaging bag, to obtain a secondary battery.

The present disclosure further provides an energy-storage apparatus. The energy-storage apparatus includes a box body and at least one battery in any one of the above embodiments, where the at least one battery is accommodated in the box body. The energy-storage apparatus with the battery has good performance, which is beneficial to the use of the energy-storage apparatus. By accommodating the battery in the box body, the fixation and protection of the battery can be increased, and the service life of the energy-storage apparatus can be prolonged. It can be understood that, the energy-storage apparatus may have one or more batteries. When the energy-storage apparatus contains multiple batteries, the multiple batteries may be connected in at least one of parallel or series.

The present disclosure further provides an electricity-consumption device. The electricity-consumption device includes the energy-storage apparatus in the foregoing embodiment, which is conducive to improving the product competitiveness and usage performance of the electricity-consumption device. In an optional embodiment, the electricity-consumption device includes an electricity-consumption device body, and the energy-storage apparatus is configured to power the electricity-consumption device body. In an optional embodiment, the electricity-consumption device body includes a device positive electrode and a device negative electrode. The positive electrode of the battery in the energy-storage apparatus is configured to electrically connect to the device positive electrode of the electricity-consumption device body, and the negative electrode of the battery in the energy-storage apparatus is configured to electrically connect to the device negative electrode of the electricity-consumption device body, to power the electricity-consumption device.

The electricity-consumption device of the present disclosure may include, but is not limited to, a container, an electric scooter, an electric vehicle, a ship, a spacecraft, an electric toy, an electric tool, etc. The spacecraft is, for example, an airplane, a rocket, a space shuttle, a spaceship, etc. The electric toy includes, for example, a fixed or mobile electric toy, such as an electric vehicle toy, an electric ship toy, an electric airplane toy, etc. The electric tool includes, for example, a metal cutting electric tool, a grinding electric tool, an assembly electric tool, and a railway electric tool. For example, the electric tool may be an electric drill, an electric grinder, an electric wrench, an electric screwdriver, an electric hammer, an impact drill, a concrete vibrator, or an electric planer.

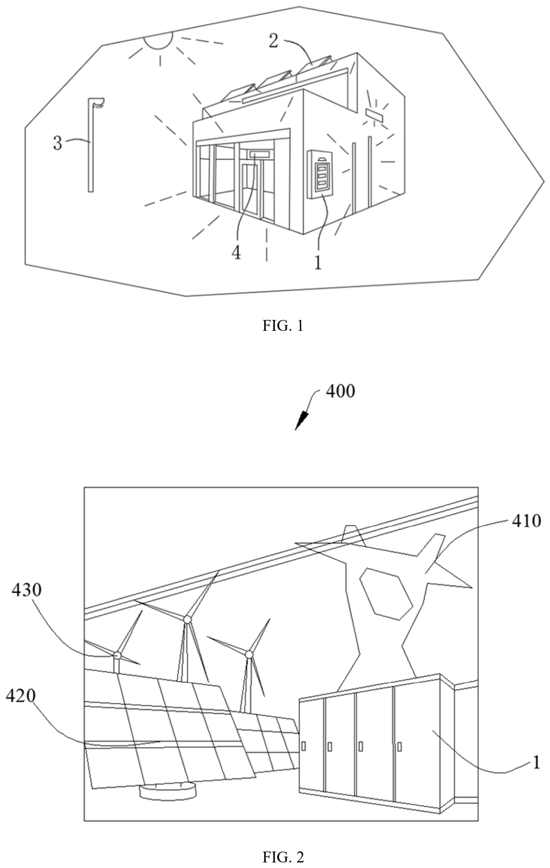

Reference can be made to FIG. 1, which is a schematic structural diagram of a household energy-storage system according to an embodiments of the present disclosure. The embodiment of FIG. 1 of the present disclosure of the present disclosure is described by taking a household energy-storage scenario in a user-side energy storage as an example, and the energy-storage apparatus of the present disclosure is not limited to the household energy-storage scenario.

The present disclosure provides a household energy-storage system. The household energy-storage system includes an electric energy conversion device 2 (a photovoltaic panel), a first user load 3 (a street lamp), a second user load 4 (a household appliance such as an air conditioner, etc.), etc., and an energy-storage apparatus 1. The energy-storage apparatus 1 is a small energy-storage box that can be mounted on an outdoor wall through wall hanging. Specifically, the photovoltaic panel can convert solar energy into electric energy in a low electricity price period, and the energy-storage apparatus 1 is configured to store the electric energy and supply the electric energy to street lamps and household appliances for use in a peak electricity price period, or to supply power when the power grid is off/out of power.

Reference can be made to FIG. 2, which is a schematic structural diagram of a commercial energy-storage system 400 according to an embodiments of the present disclosure. The embodiment of FIG. 2 of the present disclosure is described by taking a shared energy-storage scenario in a power generation/distribution side as an example, and the energy-storage apparatus 1 of the present disclosure is not limited to the energy storage scenario in the power generation/distribution side.

The present disclosure provides the commercial energy-storage system 400. The commercial energy-storage system 400 includes a high-voltage cable 410, a first electric-energy-conversion device 420, a second electric-energy-conversion device 430, and the energy-storage apparatus 1 provided in the present disclosure. In the case of power generation, the first electric-energy-conversion device 420 and the second electric-energy-conversion device 430 are configured to convert energy of other forms into electric energy, are connected to the high-voltage cable 410, and supply the electric energy to the power consumption side of the distribution network for use. When the electrical load is low and the first electric-energy-conversion device 420 and the second electric-energy-conversion device 430 generate excess power, the excess power is stored in the energy-storage apparatus 1, to reduce the wind and solar power abandonment rates and improve the problem of new energy power generation and consumption. When the electrical load is high, the power grid issues an instruction to transmit the electricity stored in the energy-storage apparatus 1 to the power consumption side in a grid-connected mode in conjunction with the high-voltage cable 410, providing peak load regulation, frequency regulation, standby, and other services for the operation of the power grid, giving full play to the peak load regulation of the power grid, promoting peak load reduction and valley filling of the power grid, and alleviating the power supply pressure of the power grid.

Optionally, the first electric-energy-conversion device 420 and the second electric-energy-conversion device 430 can convert at least one of solar energy, light energy, wind energy, thermal energy, tidal energy, biomass energy, mechanical energy, etc., into electric energy.

There may be multiple energy-storage apparatus 1, the multiple energy-storage apparatus 1 are connected in series or in parallel with one another, and the multiple energy-storage apparatus 1 are supported and electrically connected by an isolation plate (not illustrated). In embodiments of the present disclosure, "multiple", "a plurality of", or "the plurality of" means two or more. The energy-storage apparatus 1 is further provided with an energy-storage box outside the energy-storage apparatus 1. The energy-storage box is configured to accommodate the energy-storage apparatus 1.

Optionally, the energy-storage apparatus 1 may include, but is not limited to, a battery module, a battery pack, a battery system, etc. The battery module can be a battery module formed by connecting multiple batteries of the present disclosure in series/parallel. The battery pack can include multiple batteries of the present disclosure. The battery system can be a charging/discharging system including the battery or battery pack of the present disclosure.

The actual application form of the energy-storage apparatus 1 provided in the embodiment of the present disclosure may be, but is not limited to, the listed products, and may also be other application forms. The application form of the energy-storage apparatus 1 is not strictly limited in embodiments of the present disclosure. Embodiments of the present disclosure are illustrated with an example that the energy-storage apparatus 1 is a multi-core battery. When the energy-storage apparatus 1 is a single cell, the single cell may be at least one of a cylindrical battery, a square battery, etc.

The positive electrode, the battery, the energy-storage apparatus, and the electricity-consumption device of the present disclosure will be further described in conjunction with specific embodiments below.

### Embodiments

Embodiments of the present disclosure will be elaborated with reference to preparation embodiments, embodiments, and comparative embodiments below. Various tests and evaluations are carried out according to the following methods.

### Embodiment 1

### <Preparation of a Positive Electrode>

### <Preparation of a First Pre-Sintered Material>

Ferrous oxalate as an iron source, lithium dihydrogen phosphate as a phosphorus source, lithium carbonate as a lithium source, and titanium dioxide as a titanium source are weighted according to a stoichiometric ratio required in LiFe_{0.99}Ti_{0.01}PO₄/C as a first raw material. Then, glucose as a carbon source is weighted to be 20% of the total mass of the first raw material and used as a second raw material. The first raw material and the second raw material are evenly mixed in a ball mill, pure water is added as a dispersant, and high-energy ball milling is carried out. A ball-to-material ratio during the high-energy ball milling is 4:1, the rotation speed is 1500 r/min, and the ball milling time is 20 h. Spray drying is carried out on the material after high-energy ball milling to form a first powder, where the pump speed of spray drying is 10 mL/min, and the drying temperature is 200 °C. The first powder is put into the vacuum atmosphere furnace for first sintering treatment, and then is ball-milled and crushed to obtain the first pre-sintered material, where the protective atmosphere is nitrogen, the sintering temperature is 350 °c, and the sintering time is 6 h.

### <Preparation of a Second Pre-Sintered Material>

Ferrous oxalate as an iron source, lithium dihydrogen phosphate as a phosphorus source, lithium carbonate as a lithium source, and titanium dioxide as a titanium source are weighted according to a stoichiometric ratio required in LiFe_{0.99}Ti_{0.01}PO₄/C as a third raw material. Then, glucose as a carbon source is weighted to be 18% of the total mass of the third raw material and used as a fourth raw material. The third raw material and the fourth raw material are evenly mixed in a ball mill, pure water is added as a dispersant, and high-energy ball milling is carried out. A ball-to-material ratio during the high-energy ball milling is 4: 1, the rotation speed is 1500 r/min, and the ball milling time is 20 h. Spray drying is carried out on the material after high-energy ball milling to form a second powder, where the pump speed of spray drying is 10 mL/min, and the drying temperature is 200 °C. The second powder is put into the vacuum atmosphere furnace for second sintering treatment, and then is ball-milled and crushed to obtain the second pre-sintered material, where the protective atmosphere is nitrogen, and the sintering temperature and the sintering time are as illustrated in Table 1.

### <Preparation of a Positive Electrode Material>

The prepared first pre-sintered material and the second pre-sintered material are mixed at a mass ratio of 7:3, put into the vacuum atmosphere furnace for third sintering treatment, and then crushed to obtain the positive electrode material, where the protective atmosphere is nitrogen, the sintering temperature is 700 °C, and the sintering time is 10 h.

### Preparation of the positive-electrode-material layer

The prepared positive electrode material, conductive carbon black (Super-P), and binder PVDF are mixed at a mass ratio of 95: 2: 3. N-methylpyrrolidone (NMP) is added as a solvent to prepare a positive electrode slurry with a solid content of 50 wt%, and stirred evenly. Then, the positive electrode slurry is evenly coated on one surface of a positive current collector with a thickness of 10 µm, and dried at 85° C. The above steps are repeated on the other surface of the positive electrode. Finally, rolling is carried out to obtain a positive electrode coated with the positive-electrode-material layer on both sides. The thickness of the positive-electrode-material layer on one surface is 100 µm.

### <Preparation of a Negative Electrode>

The negative electrode material artificial graphite, Super-P, and sodium carboxymethyl cellulose (CMC-Na) are mixed at a mass ratio of 95: 2.5: 2.5. Deionized water is added to prepare a negative electrode slurry with a solid content of 60 wt%, and stirred evenly. The negative electrode slurry is evenly coated on one surface of a negative current collector copper foil with a thickness of 10 µm, and dried at 85 °C. Then, the above steps are repeated on the other surface of the negative electrode. Finally, rolling is carried out to obtain a negative electrode coated on the negative-electrode-material layer both sides. The thickness of the negative-electrode-material layer on one surface is 70 µm.

### <Preparation of an Electrolyte>

Ethylene carbonate (EC) and diethyl carbonate (DEC) are mixed at a volume ratio of 1:1, dissolved and stirred thoroughly, and placed in an environment of less than or equal to 5 °C for 12 hours. Then, lithium salt LiPF₆ is added and mixed evenly to obtain the electrolyte. The concentration of LiPF₆ in the electrolyte is 12.5 wt%.

### <Preparation of a Separator>

A polyethylene (PE) porous polymer film with a thickness of 16 µm is used as the separator.

### <Assembly of the Lithium-Ion Battery>

The prepared positive electrode and the prepared negative electrode are put into a press machine for pressing, respectively. Then, a circular positive electrode with a diameter of 15 mm and a circular negative electrode with a diameter of 18 mm are cut off by using a punch, respectively. Then, the circular positive electrode, the separator, and the circular negative electrode are stacked in order, and the separator is positioned between the circular positive electrode and the circular negative electrode to play a role of isolation. Finally, the prepared electrolyte is injected, to form the lithium-ion battery.

### Embodiment 2 to Embodiment 4

Except that the addition amount of the carbon source is adjusted according to Table 1 in <Preparation of the Second Pre-Sintered Material>, the rest is the same as those in Embodiment 1.

### Embodiment 5 to Embodiment 13

Except that the sintering temperature and the sintering time of the second sintering treatment are adjusted according to Table 1 in <Preparation of the Second Pre-Sintered Material>, the rest is the same as those in Embodiment 1.

### Embodiment 14

Except that the raw materials are weighed according to a stoichiometric ratio required in LiFe_{0.98}Ti_{0.02}PO₄/C in <Preparation of the First Pre-Sintered Material> and <Preparation of the Second Pre-Sintered Material>, the rest is the same as those in Embodiment 1.

### Embodiment 15

Except that the raw materials are weighed according to a stoichiometric ratio required in LiFe_{0.97}Ti_{0.03}PO₄/C in <Preparation of the First Pre-Sintered Material> and <Preparation of the Second Pre-Sintered Material>, the rest is the same as those in Embodiment 1.

### Embodiment 16

Except that the raw materials are weighed according to a stoichiometric ratio required in LiFe_{0.96}Ti_{0.04}PO₄/C in <Preparation of the First Pre-Sintered Material> and <Preparation of the Second Pre-Sintered Material>, the rest is the same as those in Embodiment 1.

### Embodiment 17

Except that the raw materials are weighed according to a stoichiometric ratio required in LiFe_{0.95}Ti_{0.05}PO₄/C in <Preparation of the First Pre-Sintered Material> and <Preparation of the Second Pre-Sintered Material>, the rest is the same as those in Embodiment 1.

### Comparative embodiment 1

Except that a positive electrode material used is different from that in Embodiment 1 in <Preparation of the Positive Electrode>, the rest is the same as those in Embodiment 1. The positive electrode material is prepared as follows:
Ferrous oxalate as an iron source, lithium dihydrogen phosphate as a phosphorus source, lithium carbonate as a lithium source, and titanium dioxide as a titanium source are weighted according to a stoichiometric ratio required in LiFe_{0.99}Ti_{0.01}PO₄/C as a first raw material. Then, glucose as a carbon source is weighted to be 20% of the total mass of the first raw material and used as a second raw material. The first raw material and the second raw material are evenly mixed in a ball mill, pure water is added as a dispersant, and high-energy ball milling is carried out. A ball-to-material ratio during the high-energy ball milling is 4:1, the rotation speed is 1500 r/min, and the ball milling time is 20 h. Spray drying is carried out on the material after high-energy ball milling to form a powder, where the pump speed of spray drying is 10 mL/min, and the drying temperature is 200 °C. The powder is put into the vacuum atmosphere furnace for first sintering treatment, and then is ball-milled and crushed to obtain the positive electrode material, where the protective atmosphere is nitrogen, the sintering temperature is 700 °c, and the sintering time is 10 h.

### Comparative embodiment 2

Except that a positive electrode material used is different from that in Embodiment 1 in <Preparation of the Positive Electrode>, the rest is the same as those in Embodiment 1. The positive electrode material is prepared as follows:
Ferrous oxalate as an iron source, lithium dihydrogen phosphate as a phosphorus source, lithium carbonate as a lithium source, and titanium dioxide as a titanium source are weighted according to a stoichiometric ratio required in LiFe_{0.99}Ti_{0.01}PO₄/C as a first raw material. Then, glucose as a carbon source is weighted to be 25% of the total mass of the first raw material and used as a second raw material. The first raw material and the second raw material are evenly mixed in a ball mill, pure water is added as a dispersant, and high-energy ball milling is carried out. A ball-to-material ratio during the high-energy ball milling is 4:1, the rotation speed is 1500 r/min, and the ball milling time is 20 h. Spray drying is carried out on the material after high-energy ball milling to form a powder, where the pump speed of spray drying is 10 mL/min, and the drying temperature is 200 °C. The powder is put into the vacuum atmosphere furnace for first sintering treatment, and then is ball-milled and crushed to obtain the positive electrode material, where the protective atmosphere is nitrogen, the sintering temperature is 600 °c, and the sintering time is 10 h.

**Table 1: Preparation parameters of Embodiment 1 to Embodiment 13**

| | Preparation of the second pre-sintered material | | |
|---|---|---|---|
| | Addition amount of the carbon source (wt%) | Sintering temperature (°C) | Sintering time (h) |
| Embodiment 1 | 18 | 440 | 6 |
| Embodiment 2 | 16 | 440 | 6 |
| Embodiment 3 | 14 | 440 | 6 |
| Embodiment 4 | 12 | 440 | 6 |
| Embodiment 5 | 18 | 460 | 6 |
| Embodiment 6 | 18 | 480 | 6 |
| Embodiment 7 | 18 | 500 | 6 |
| Embodiment 8 | 18 | 520 | 6 |
| Embodiment 9 | 18 | 440 | 8 |
| Embodiment 10 | 18 | 440 | 10 |
| Embodiment 11 | 18 | 440 | 12 |
| Embodiment 12 | 18 | 440 | 14 |
| Embodiment 13 | 18 | 440 | 16 |

In Table 1, "/" indicates that related preparation parameters are not available.

Test methods and devices:

### Test of the average sphericity:

The sphericity of 50 second particles with a particle size ≥ 1 µm is measured by scanning electron microscope (SEM) at a magnification of 3K, and then an average is calculated. The average is the average sphericity of the second particles.

### Determination of the maximum particle size Dₘₐₓ of the primary particles:

Five SEM images of the positive electrode material taken at a magnification of 3K are randomly selected, a primary particle with the longest diameter is selected from second particles in the five SEM images, and the diameter of the primary particle is taken as *Dₘₐₓ.*

### Test of a proportion of a hole area:

The positive electrode is cut using a focused ion beam, and a cross-sectional distribution of the second particle in the positive-electrode-material layer is observed using the SEM at a magnification of 5K. An ImageJ software is adopted to measure a sum of hole areas of 100 second particles that is denoted as *S*₁ and a total area of the 100 second particles that is denoted as *Sₜₒₜₐₗ*, and then a value of the proportion *A* of the hole area is [(*S*₁/*Sₜₒₜₐₗ*)/100] × 100%.

### Test of the particle size distribution of the material:

The particle size distribution of the positive electrode material and the particle size distribution of the first particles are measured using a laser diffraction particle size distribution measuring instrument (Malvern Mastersizer 3000) in accordance with a laser diffraction method for particle size distribution (GB/T19077-2016), to obtain the *Dv50* of the positive electrode material and the *Dv50* of the first particles.

### Test of the elongation of the positive electrode:

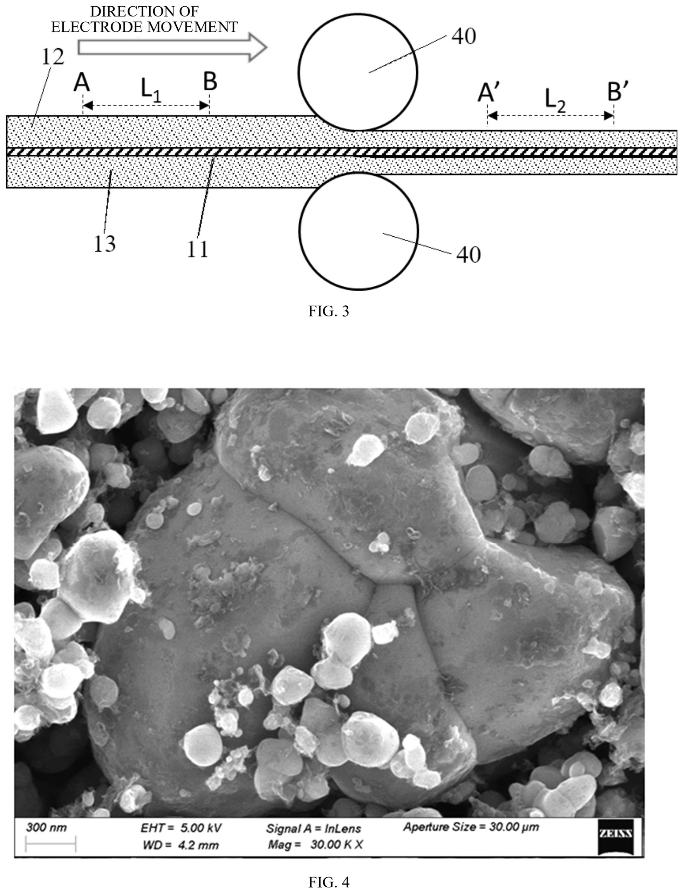

As illustrated in FIG. 3, exemplarily, the positive electrode includes a positive current collector 11, a first positive-electrode-material layer 12, and a second positive-electrode-material layer 13. When two points *A* and *B* are marked on a surface of the first positive-electrode-material layer 12 or a surface of the second positive-electrode-material layer 13 before rolling, *L*₁ is a distance between the two points *A* and *B* before rolling of the positive electrode. After being rolled by a roller 40, the positive electrode will be elongated along a length direction of the positive electrode, and the distance between the two points *A* and *B* will be elongated, i.e., a distance from *A'* to *B',* which is denoted as *L*₂. The elongation of the electrode is calculated as: (*L*₂-*L*₁)/*L*₁×100%.

### Test of the rate performance:

The test temperature is 25 °C, and a lithium-ion battery is charged to 3.65 V at a rate of 0.1 (C), and then discharged to 2.5 V at a rate of 0.1 C. The discharge capacity at this moment is recorded as 0.1 C, and the unit is mAh/g.

### Test of the cycling performance:

The test temperature is 25 °C, and a lithium-ion battery is charged to 3.65 V at a constant power of 1C, and then discharged to 2.5 V at a constant power of 1C after standing for 10 min. The capacity obtained at this step is an initial discharge capacity *C*₀*.* A cycle test of 1C charging/1C discharging is carried out for 200 cycles, and the discharge capacity of the 200-th cycle is recorded. The cycle capacity retention rate is calculated as: (discharge capacity of the 200-th cycle/initial discharge capacity *C*₀) × 100%.

**Table 2: related parameters of the positive electrode materials in Embodiments and Comparative embodiments**

| | compacted density (g/cm³) | *D*₁ (µm) | *Dₘₐₓ* (µm) | *A*(%) | *S* |
|---|---|---|---|---|---|
| Embodiment 1 | 2.57 | 0.92 | 1.5 | 11 | 0.6 |
| Embodiment 2 | 2.55 | 0.95 | 2.2 | 11 | 0.6 |
| Embodiment 3 | 2.54 | 1.00 | 2.8 | 15 | 0.5 |
| Embodiment 4 | 2.53 | 1.25 | 5.5 | 18 | 0.4 |
| Embodiment 5 | 2.56 | 0.93 | 1.6 | 11 | 0.6 |
| Embodiment 6 | 2.54 | 0.98 | 2.5 | 13 | 0.5 |
| Embodiment 7 | 2.53 | 1.10 | 3.0 | 15 | 0.4 |
| Embodiment 8 | 2.52 | 1.30 | 6.0 | 20 | 0.4 |
| Embodiment 9 | 2.56 | 0.93 | 1.5 | 11 | 0.6 |
| Embodiment 10 | 2.55 | 0.99 | 2.3 | 13 | 0.5 |
| Embodiment 11 | 2.55 | 1.08 | 2.9 | 15 | 0.4 |
| Embodiment 12 | 2.53 | 1.25 | 5.8 | 23 | 0.4 |
| Embodiment 13 | 2.52 | 1.28 | 6.2 | 25 | 0.3 |
| Embodiment 14 | 2.55 | 0.91 | 1.5 | 10 | 0.6 |
| Embodiment 15 | 2.55 | 0.91 | 1.4 | 11 | 0.6 |
| Embodiment 16 | 2.56 | 0.90 | 1.4 | 11 | 0.6 |
| Embodiment 17 | 2.56 | 0.88 | 1.3 | 12 | 0.6 |
| Comparative embodiment 1 | 2.54 | 0.85 | / | 0 | 0.4 |
| Comparative embodiment 2 | 2.43 | 1.12 | 0.1 | 40 | 0.9 |

**Table 3: Performance data of Embodiments and Comparative embodiments**

| | elongation (%) | 0.1C discharge capacity (mAh/g) | Capacity retention rate (%) |
|---|---|---|---|
| Embodiment 1 | 0.8 | 144.5 | 90.5 |
| Embodiment 2 | 0.8 | 147.5 | 93.0 |
| Embodiment 3 | 0.7 | 145.5 | 92.1 |
| Embodiment 4 | 0.6 | 143.6 | 88.0 |
| Embodiment 5 | 0.7 | 146.0 | 91.8 |
| Embodiment 6 | 0.6 | 148.0 | 93.5 |
| Embodiment 7 | 0.5 | 146.3 | 92.0 |
| Embodiment 8 | 0.5 | 144.2 | 90.2 |
| Embodiment 9 | 0.7 | 146.3 | 92.1 |
| Embodiment 10 | 0.6 | 147.8 | 93.1 |
| Embodiment 11 | 0.5 | 146.4 | 92.0 |
| Embodiment 12 | 0.5 | 144.3 | 90.0 |
| Embodiment 13 | 0.5 | 140.0 | 88.5 |
| Embodiment 14 | 0.8 | 147.0 | 92.5 |
| Embodiment 15 | 0.8 | 148.3 | 93.8 |
| Embodiment 16 | 0.8 | 147.5 | 92.1 |
| Embodiment 17 | 0.8 | 144.1 | 90.2 |
| Comparative embodiment 1 | 1.2 | 138.5 | 91.0 |
| Comparative embodiment 2 | 1.4 | 137.0 | 75.6 |

As can be seen from Embodiment 1 to Embodiment 17 and Comparative embodiment 1 to Comparative embodiment 2, in Comparative embodiment 1, although the capacity retention rate is relatively high, the elongation of the positive electrode is relatively high, and the 0.1 C discharge capacity is relatively low. This may be due to the positive electrode material in Comparative embodiment 1, in which small particles have been completely fused into large particles. As a result, there is no gap in the surface of the large particles, and a solid structure is formed inside the large particles. The solid structure is good for improving the mechanical strength of the material, but is unfavorable for electrolyte infiltration and makes it difficult to hinder the displacement and deformation of the particles subjected to pressure, leading to an increased elongation of the positive electrode and limiting the capacity performance. In Comparative embodiment 2, both the 0.1 C discharge capacity and the capacity retention rate are relatively low, and the elongation of the positive electrode is relatively high. This may be due to the positive electrode material in Comparative embodiment 2, in which small particles are in nanoscale size, such that the formed large particles have a loose porous structure. Although the loose porous structure is conducive to electrolyte infiltration, but is unfavorable for improving the mechanical strength of the material. As such, the particles are likely to be cracked during rolling, and it is difficult to hinder the displacement and deformation of the particles subjected to pressure, resulting in a significant increase in the elongation of the positive electrode and a relatively poor cycling performance. In the present disclosure, the positive electrode has a relatively low elongation, and the lithium-ion battery has excellent capacity performance and cycling performance.

The content of the doping element in the positive electrode material usually also has an impact on the performance of the positive electrode. As can be seen from Embodiment 1, and Embodiment 14 to Embodiment 17, on the basis that the positive electrode material has the structural characteristics of the present disclosure, the content of the doping element in the positive electrode material can be adjusted to be within a range provided in the present disclosure, such that a lithium-ion battery with excellent capacity performance and cycling performance can be obtained, and the elongation of the positive electrode is low.

FIG. 4 is an SEM diagram of a positive electrode material in Embodiment 1. As can be seen from FIG. 4, a secondary particle (i.e., a large particle with relatively dark color in the figure, i.e., the second particle in the present disclosure) include multiple fused primary particles, the secondary particle defines gaps in the surface of the secondary particle, and the gaps are defined at fused interfaces of the multiple fused primary particles, such that the second particle has a "spliced" structure on the surface of the second particle. In addition, the surface of the secondary particle is attached with first particles with a relatively small particle size (i.e., small particles with a relatively bright color in the figure), such that a two-stage gradation of large particles and small particles can be formed with the second particles.

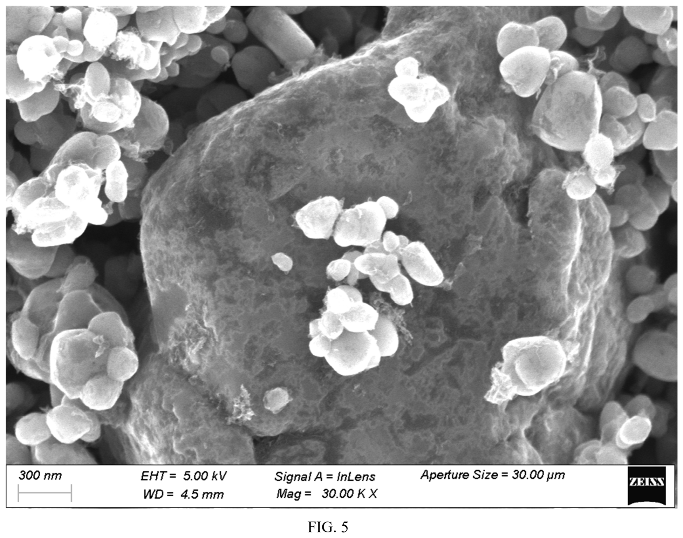

FIG. 5 is an SEM diagram of a positive electrode material in Comparative embodiment 1. As can be seen from FIG. 5, a secondary particle (i.e., a large particle with relatively dark color in the figure) does not define any gap in the surface of the secondary particle, which indicates that primary particles used for forming the secondary particle have been completely fused.

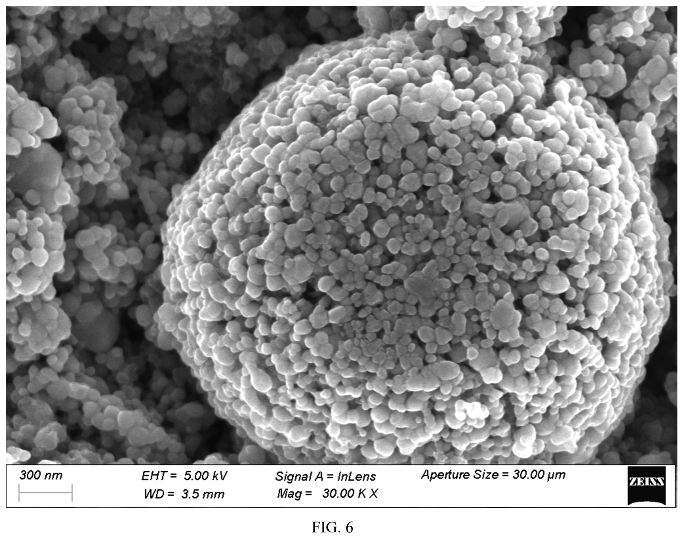

FIG. 6 is an SEM diagram of a positive electrode material in Comparative embodiment 2. As can be seen from FIG. 6, secondary particles have an obvious spherical structure, and the secondary particles have a loose porous structure on the surface of the secondary particles. The loose porous structure is formed by primary particles with a nanoscale size.

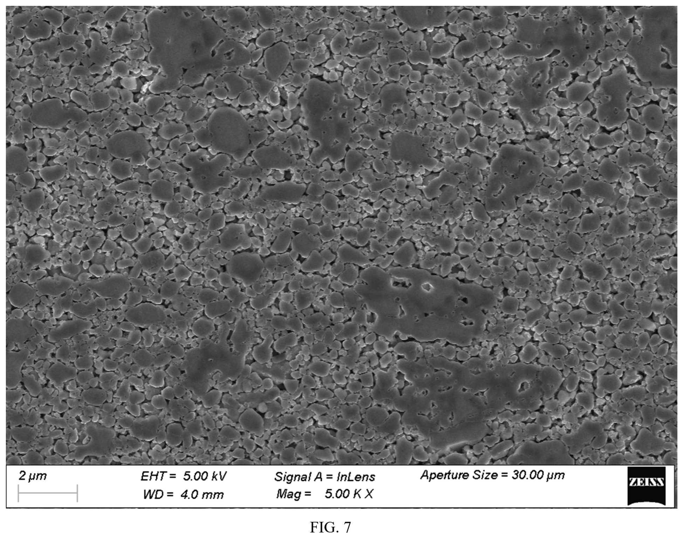

FIG. 7 is an SEM diagram of a cross section of a positive-electrode-material layer in Embodiment 1. As can be seen from FIG. 7, the positive-electrode-material layer is distributed with block-like second particles having a relatively large particle size and first particles having a solid ellipsoid shape, forming a two-stage gradation of large particles and small particles.

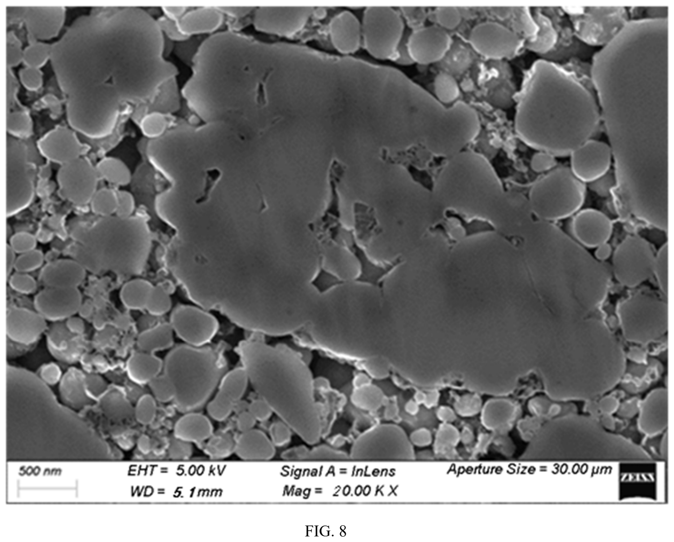

FIG. 8 is a partially enlarged SEM diagram of a cross section of a positive-electrode-material layer in Embodiment 1. As can be seen from FIG. 8, a secondary particle (i.e., a particle with the largest size in the figure, i.e., the second particle in the present disclosure) defines gaps in a surface of the secondary particle and holes inside the secondary particle.

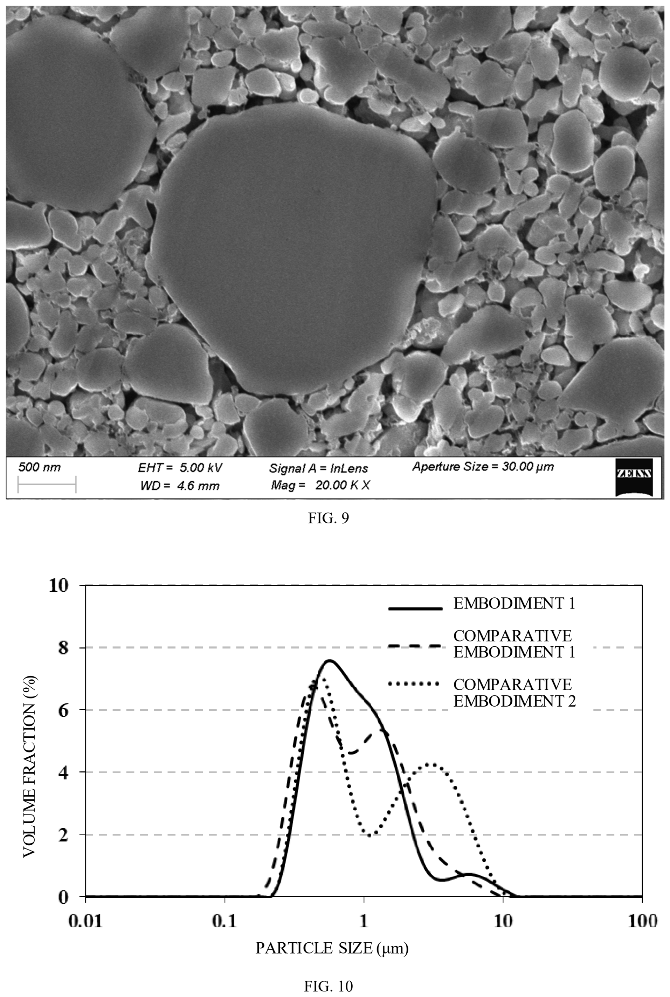

FIG. 9 is a partially enlarged SEM diagram of a cross section of a positive-electrode-material layer in Comparative embodiment 1. As can be seen from FIG. 9, a secondary particle (i.e., a particle with the largest size in the figure) is of a solid structure, and the secondary particle defines no gap in a surface of the secondary particle and no hole inside the secondary particle.

FIG. 10 is a particle size distribution diagram of positive electrode materials in Embodiment 1, Comparative embodiment 1, and Comparative embodiment 2. As can be seen from FIG. 10, in the present disclosure, the average sphericity of the second particles is adjusted within the range provided in the present disclosure, such that the positive electrode material can have a higher compacted density and the proportion of large particles is smaller, thereby improving the capacity performance of the lithium-ion battery.

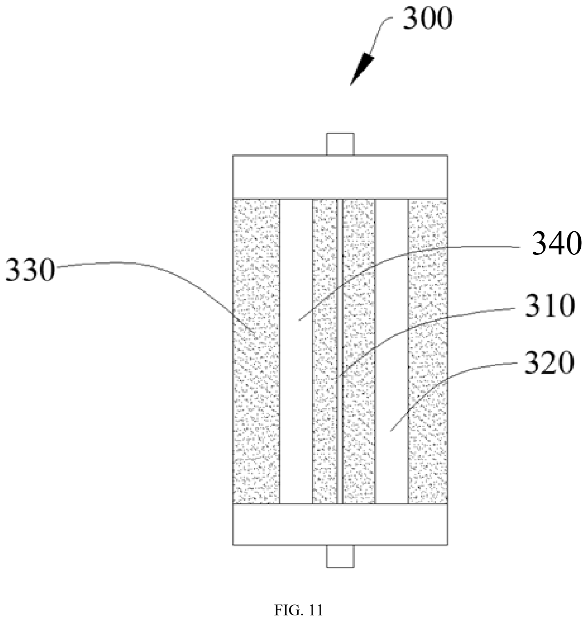

Referring to FIG. 11, a battery 300 is further provided in the disclosure. The battery 300 includes a positive electrode 340 provided in the present disclosure, a separator 310, a negative electrode 320, and an electrolyte 330. The separator 310 is disposed at one side of the positive electrode 200. The negative electrode 320 is disposed at one side of the separator 310 away from the positive electrode 200. At least part of the positive electrode 340 and at least part of the negative electrode 320 are infiltrated in the electrolyte 330.

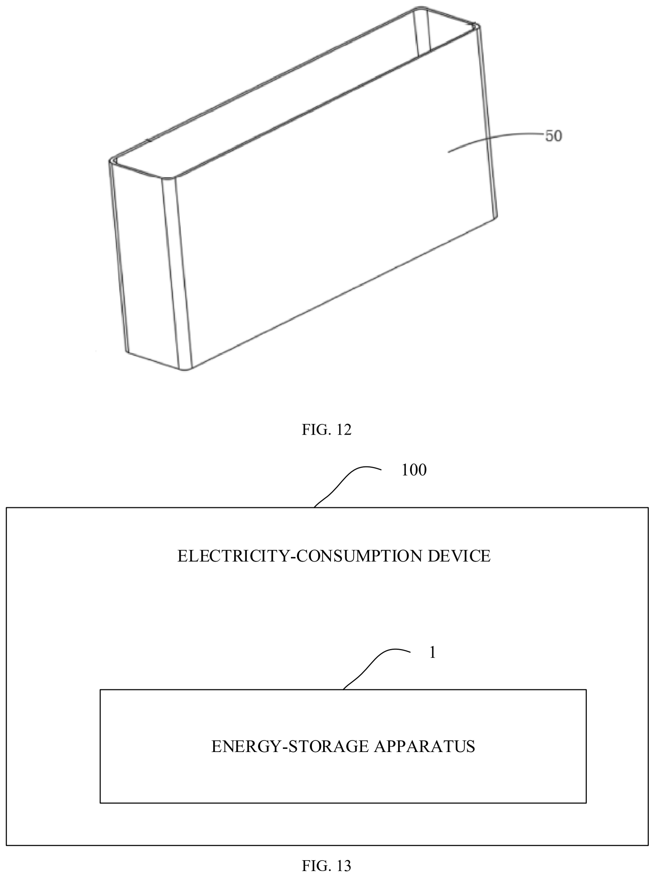

An energy-storage apparatus 1 is further provided in embodiments of the present disclosure. The energy-storage apparatus 1 includes a box body 50 as illustrated in FIG. 12 and at least one battery provided in the aforementioned embodiments, where the at least one battery is accommodated in the box body 50.

As illustrated in FIG. 12, this embodiment provides an electricity-consumption device 100 including an energy-storage apparatus 1 provided in the above implementation of the present disclosure, where the energy-storage apparatus 1 supplies power to the electricity-consumption device.

The above is a detailed introduction to the positive electrode, the battery, the energy-storage apparatus, and the electricity-consumption device disclosed in the present disclosure. Specific examples are used herein to illustrate the principles and embodiments of the present disclosure. The description of the foregoing embodiments is only used to help understand the technical solutions and core inventions of embodiments of the present disclosure. Meanwhile, those skilled in the art may change the specific embodiments and the scope of application according to the ideas of the present disclosure. In summary, the content of the specification should not be understood as a limitation on the present disclosure.

## Claims

1. A positive electrode (340), comprising a positive current collector (11), wherein the positive current collector (11) is provided with a positive-electrode-material layer on at least one surface of the positive current collector (11), the positive-electrode-material layer comprises a positive electrode material, and the positive electrode material comprises first particles and second particles,
wherein the second particles each are a secondary particle formed by fusing primary particles, each second particle defines gaps in a surface of the second particle, the second particle defines holes inside the second particle, and the holes are in communication with an outside through the gaps; and
wherein an average sphericity of the second particles is *S*, and *S* satisfies *S* ≤ 0.6.

2. The positive electrode (340) of claim 1, wherein 0.4 ≤ *S* ≤ 0.6.

3. The positive electrode (340) of claim 1or 2, wherein in a cross section of the second particle, a proportion of an area of the holes to a total area of the cross section is *A,* and *A* satisfies 10% ≤ *A* ≤ 23%.

4. The positive electrode (340) of any one of claims 1 to 3, wherein the second particle comprises a plurality of fused primary particles, and the gaps are defined at fused interfaces of the plurality of fused primary particles.

5. The positive electrode (340) of claim 4, wherein a maximum particle size of the primary particles is *Dₘₐₓ,* and *Dₘₐₓ* satisfies 1 µm ≤ *Dₘₐₓ* ≤ 6 µm.

6. The positive electrode (340) of any one of claims 1 to 5, wherein the positive electrode material satisfies at least one of the following characteristics:
a) a *Dv50* of the positive electrode material is *D*₁, and *D*₁ satisfies 0.8 µm ≤ *D*₁ ≤ 1.3 µm; or
b) a compacted density of the positive electrode material ranges from 2.5 g/cm³ to 2.6 g/cm³.

7. The positive electrode (340) of any one of claim 1 to 6, wherein each first particle is of a solid ellipsoidal structure.

8. The positive electrode (340) of claim 7, wherein a *Dv50* of the first particles is *D*₂, and *D*₂ satisfies 0.2 µm ≤ *D*₂ ≤ 0.5 µm.

9. The positive electrode (340) of any one of claims 1 to 8, wherein a chemical formula of the positive electrode material is LiFeₓTi_{y}PO₄/C, wherein *x*+*y*=1, and 0 < *y* ≤ 0.05.

10. The positive electrode (340) of any one of claims 1 to 9, wherein an elongation of the positive electrode ranges from 0.5% to 0.8%.

11. A battery (300) comprising the positive electrode (340) of any one of claims 1 to 10.

12. An energy-storage apparatus (1) comprising a box body (50) and at least one battery (300) of claim 11, wherein the at least one battery is accommodated in the box body.

13. An electricity-consumption device (100) comprising the energy-storage apparatus (1) of claim 12, wherein the energy-storage apparatus (1) is configured to power the electricity-consumption device (100).
